Europäisches Patentamt

European Patent Office

Office européen des brevets

(11) Publication number: **0 447 211 A2**

# (12) EUROPEAN PATENT APPLICATION

(21) Application number: 91302117.6

(51) Int. Cl.⁵: **G03B 9/22**, B32B 27/00

(22) Date of filing: 13.03.91

(30) Priority: 14.03.90 JP 63842/90
10.01.91 JP 1607/91

(43) Date of publication of application:
18.09.91 Bulletin 91/38

(84) Designated Contracting States:
DE FR GB

(71) Applicant: NIKON CORPORATION
2-3, Marunouchi 3-chome Chiyoda-ku
Tokyo (JP)

(72) Inventor: Matsubara, Takashi
25-21-305 Tamagawadai 2-chome
Setagaya-ku, Tokyo (JP)

(74) Representative: Burke, Steven David et al
R.G.C. Jenkins & Co. 26 Caxton Street
London SW1H 0RJ (GB)

(54) **Plate Material for light-shielding blade.**

(57)    [Object] To provide a plate having lightweight and strength which can be used for ultra-high speed shutter of cameras, etc.
[Constitution] In a plate material for light-shielding blade made of a reinforced resin having a laminated structure comprising two sheets of a surface material layers made of a reinforced resin comprising continuous carbon fibers aligned in one driection substantially parallel to the lengthy direction of said light-shielding blade and a matrix resin including the fibers, and an intermediate layer sandwiched between these two sheets, characterized in that the intermediate layer is a reinforced resin comprising aromatic polyamide fibers and a matrix resin including the fibers, and also the polyamide resin may be either continuous fibers or short fibers, and the fiber direction is made substantially vertical to the lengthy direction of the light-shielding blade or arm.

EP 0 447 211 A2

F I G. 1

# PLATE MATERIAL FOR LIGHT-SHIELDING BLADE

## BACKGROUND OF THE INVENTION

### Field of the Invention

This invention relates to a plate material which is used for a light-shielding blade which is demanded to move at high speed such as shutter blade or iris blade of focal plane shutter or lens shutter of camera, or an arm for supporting said light-shielding blade.

### Related Background Art

In recent years, for such demands as improvement of film sensitivity, new image expression, cameras have been desired to have further rapid shutter speed.

For acceleration of shutter speed, the driving force of the driving system may be increased, but by doing so, there will ensue such problems as deficient capacity of battery, earlier exchange period of battery, etc.

Therefore, it is necessary to make the blade itself lighter in weight. For making the blade lighter in weight, one may immediately think of making is thinner, but then rigidity will be extremely lowered, and for that reason there occurs the phenomenon that the blade will be wavy during running or stopping. The wave is a wave progressing in the lengthy direction of blade.

When such phenomenon occurs, or when the shutter is released, the blade may be impinged against other blades or the second group of blades, or impinged against the housing frame for determining the angular field, to be broken.

Therefore, plate material for light-shielding blade is required to be light and have high rigidity.

As this kind of plate material for light-shielding blade, as disclosed in Japanese Laid-open Patent Application No. 59-61827, U.S. Patent No. 4,482,231, Japanese Laid-open Utility Model Application No. 60-63825, Japanese Laid-open Patent Application No. 62-199439, Japanese Laid-open Patent Application No. 63-17435, there have been proposed a plate material having a laminated structure comprising (1) an intermediate layer made of a reinforced resin comprising continuous fibers of carbon fibers aligned in one direction and a matrix resin including the same and (2) surface material layers made of a reinforced resin comprising continuous fibers of carbon fibers aligned in one direction and a matrix resin including the same.

For suppressing the waving phenomenon, the surface layers are made substantially in parallel to the length direction of the light-shielding blade, while the intermediate layer substantially vertical to the lengthy direction of the light-shielding blade.

The plate material has a thickness of about 60 to 120 μm.

The plate material is, as a matter of course, is laminated plane symmetrically in the thickness direction. Both of the intermediate layer and the surface layer may not be single layers, but may also comprise a plurality of thin reinforce resin sheets laminated.

By punching or cutting the plate material into a predetermined shape, about 20 to 50 sheets of light-shielding blades with lightweight, high strength and high rigidity can be obtained.

Such light-shielding plate has been practically applied for a camera having a shutter speed of 1/8000 sec.

Further, concerting the shutter, its actuation is briefly described below.

Fig. 1 to Fig. 3 are plan views showing a longitudinally running focal plane shutter to which the light-shielding blade and the arm in the present invention are applied.

Fig. 1 shows the state where the shutter is set, Fig. 2 the state where the exposure window 15a is opened, and Fig. 3 the state where the exposure window 15a is closed.

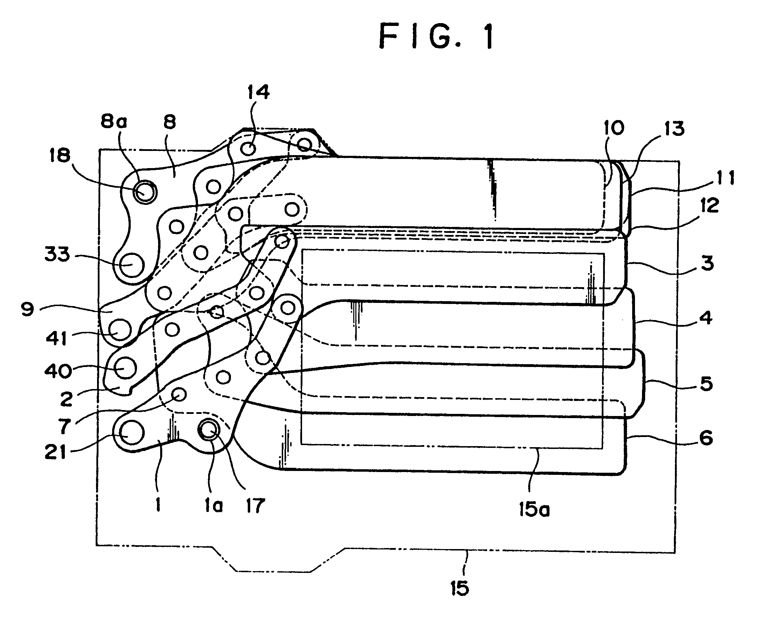

In Fig. 1 to Fig. 3, the fore-blade arm 1 and the fore-blade arm 2 rotate in the anticlockwise direction around the shaft 21 and the shaft 40, respectively, whereby the fore-blades 3 to 6 mounted rotatably with respect to the fore-blade arms 1, 2 are spread through the pin 7 to cover the exposure window 15a, while by rotation of the fore-blade arms 1 and 2 in the clockwise direction, the fore-blades 3 to 6 are folded downwardly to open the exposure window 15a.

Similarly, by rotation of the rear-blade arms 8 and 9 in the anticlockwise direction around the shafts 33 and 41 respectively, the rear-blades 10 to 13 are folded upwardly through the pin 14 to open the exposure window 15a, while by rotation of the rear-blade arms 8 and 9 in the clockwise direction, the rear-blades 10 to 13 are spread to cover the exposure window 15a.

Since the rotational movements as described above are acceleration movements, on the hole 1a of the fore-blade arm 1 and the fitting portions of the fore-blade arms 1 and 2 with the pin 7, a force is applied depending of the acceleration and inertia mass of the fore-blade system. The fore continues to work during rotational movement. Next, when the driving pin 17 fitted into the hole 1a contacts the fore-blade brake strip not shown, a great accelerations occurs on the fore-blade driving pin 17 through the momentary impingement, and a force corresponding to the acceleration and the inertia mass of the fore-blade system is applied on the hole 1a of the fore-blade arm 1 and the fitting portion of the fore-blade arms 1 and 2 with the pin 7.

The same is the case with rear-blade arms.

However, recently, a still more rapid ultra-high speed shutter exceeding 1/8000 sec. is going to be demanded. Accordingly, there has ensued the first problem that even the plate material of the prior art is still heavy.

The blade is also required to be linked to the arm of the driving system, and hitherto linking has been implemented by way of "caulking", but in such ultra-high speed shutter, there ensued the second problem that the plate material of the prior art has insufficient strength at the linking portion.

For further making the weight lighter, the arm is also desired to be made lighter in weight, but because an impact force is applied on the linking portion during driving, stopping, there ensued the third problem that the strength of the linking portion is insufficient with the carbon fiber reinforced resin.

## SUMMARY OF THE INVENTION

An object of the present invention is to solve these problems at the same time.

The present inventor has studies intensively about the caused of these problems, and consequently found that (1) the carbon fibers have a heavy specific gravity of 1.7 to 1.8 while the specific gravity of the matrix resin is about 1.2, and (2) the carbon fiber has relatively smaller elongation (elongation at break) and therefore will be broken relatively sonner when a great stress is exerted on the blade, thereby leading to breaking of the blade.

Accordingly, as the result of further progress of the study, the present inventor has found that, although the blade is required to have a rigidity for suppressing bending of the blade in the lengthy direction in order to suppress the waving phenomenon, the rigidity for suppressing bending in the direction vertical to the lengthy direction may be about 1/10 as compared with the former, and therefore it is not necessary to use carbon fibers of high rigidity for the intermediate layer which does not contribute to the rigidity of the former.

Rather, according to the present inventor, for the intermediate layer, in order to solve the second problem, a material with larger elongation (particularly elongation substantially vertical to the lengthy direction of the blade) is required.

It has been also found that the same is the case with the arm supporting the blade.

The present inventor has repeated trial and error with 20 or more kinds of resins, and found that aromatic polyamide fibers, which are equal to carbon fibers in tensile strength, but larger in elongation is the optimum as the material for the intermediate layer, whereby the first, second and third problems can be solved, to accomplish the present invention.

Accordingly, the present invention provides "a plate material for light-shielding blade made of a reinforced resin having a laminated structure comprising two sheets of a surface material layers made of a reinforced resin comprising continuous carbon fibers aligned in one direction substantially parallel to the lengthy direction of said light-shielding blade and a matrix resin including the fibers, and an intermediate layer sandwiched between said surface material layers, wherein the intermediate layer comprises a reinforced resin comprising aromatic polyamide fibers and a matrix resin including the fibers".

Aromatic polyamide fibers are commercially available from Du Pont under the trade mark of "Kevlar", which have a light specific gravity of 1.4 as compared with carbon fibers. Accordingly, the blade becomes lighter.

Although rigidity is lower than that of carbon fibers, but because used in the intermediate layer, no so high rigidity is required but such rigidity is enough.

Elongation is as large as 1.5 % to 2 % as compared with that of carbon fibers (1 % to less than 1.5 %), and yet tensile strength is equal to that of carbon fibers. However, the specific tensile strength divided by the specific gravity is larger than that of carbon fibers.

For this reason, even when a great stress is exerted at the linking portion, the stress can be relaxed to prevent breaking.

Aromatic polyamide fibers should preferably have a tensile strength of 300 kg/mm$^2$ or higher, a modules of 5,000 kg/mm$^2$ or higher, particularly 13,000 kg/mm$^2$ or higher.

The thickness of the fiber (diameter) may be suitably about 3 to 6 μm.

Aromatic fibers may be either continuous fibers (long fibers) or short fibers with lengths of about 1 to 30 mm.

In the case of short fibers, they can be kneaded into a matrix resin to be used for the intermediate layer in the form of a compound (the directions of the fibers are random), or a reinforced resin sheet with the fiber directions aligned by a special contrivance impregnated in a matrix resin may be also used for the intermediate layer.

In the latter case, the fiber direction should be preferably made substantially vertical to the lengthy direction of the blade.

When using continuous fibers of an aromatic polyamide, the fiber directions should be preferably made substantially vertical to the lengthy direction of the blade. However, continuous fibers have the drawback that they can be cut by press punching with difficulty for the time being.

For aromatic polyamide fibers, a mat-shaped product previously bound randomly may be also used. The reinforced resin sheet of the mat impregnated with a matrix resin is used as the intermediate layer.

The ratio of the polyamide fibers to the matrix resin may be 30 to 90 % by weight of the resin, particularly preferably 30 to 50 % by weight in the case of continuous fibers, 60 to 90 % by weight or 60 to 75 % by weight in the case of short fibers, based on the total weight of the both.

Examples of the matrix resin may include (1) thermoplastic resins such as Celluloid, cellulose acetate, cellulose propionate, cellulose butyrate, 6-nylon, 6,6-nylon, ABS, AS resin, high density polyethylene, polypropylene, polyacetal, polycarbonate, polyethylene terephthalate, polybutylene terephthalate, polyether ketone, polyether ether ketone, polysulfone, polyether sulfone, polyether imide, polyallylate, polyamide elastomer, ionomer, liquid crystalline polymer, polyimide, polyamide imide, fluorine resin, PPS, modified polyphenylene oxide, etc., or (2) thermosetting resins such as epoxy resin, unsaturated polyester, polyurethane, polyimide, etc.

After impregnation of polyamide fibers with a thermosettable resin liquid, a prepreg sheet having formed the resin liquid into B-stage state (the state where solidified once to exhibit no evident fluidity, and can be cured finally when heated) should be preferably used for the precursor material of the intermediate layer.

The polyamide fibers in the prepreg sheet may be either one of continuous fibers, short fibers aligned in one direction, short fibers with random directions or a mat-shaped product.

When using polyamide fibers shaped in a mat, the mat coated with a resin liquid (which can be also one containing solvent, diluent, curing agent, filler, colorant, carbon black, etc.) and dried (thermosettable) can be also used for the precursor material of the intermediate layer.

On the other hand, the reinforcing resin constituting the surface material layer comprises continuous fibers of carbon fibers aligned in one direction and a matrix resin including the fibers.

For the matrix resin, the same as in the intermediate layer can be used, and also in this case, it is similarly preferable to use a prepreg sheet.

The ratio of the carbon fibers to the matrix resin may be preferably 30 to 90 % by weight of the resin, particularly 35 to 50 % by weight or 60 to 75 % by weight.

The carbon fibers are continuous fibers and suitably those with diameter of about 3 to 10 μm.

For obtaining the plate material to be used in the present invention, lamination and bounding may be carried out in the order of surface layer/intermediate layer/surface layer, but the most preferable method is the method of laminating at least one intermediate layer of a precursor material with a thickness of about 10 to 60 μm (e.g. prepreg sheet) and at least two sheets of surface layers on the front and back sandwiching it therebetween plane symmetrically with respect to the central axis in the thickness direction of the plate material, and effecting heating pressing thereon to cure the resin liquid.

In this case, by arranging the intermediate non-continuously or by opening holes non-continuously, a hollow plate material may be also obtained.

When the intermediate layer contains continuous fibers, it is preferable to arrange the fibers so that the fiber direction may be substantially vertical to the lengthy directions of the blade and the arm.

Alternatively, for both of the intermediate layer and the surface layers, instead of using one sheet of prepreg, a plurality of sheets (e.g. 2 to 5 sheets) may be laminated and used. In this case, the fiber directions may be either crossed alternately at right angle or in parallel (all in the same direction) in the intermediate layer or the surface material layer itself.

For example, each one sheet of prepreg sheets may be employed for the surface layers, and two prepreg sheets (the two sheets are in parallel in the fiber direction) may be employed.

When the light-shielding characteristic, the surface lubricity are deficient, carbon black may be also added in an amount of 5 to 15 % by weight based on the resin liquid (solids: 100 parts by weight). The average particle size of carbon black should be preferably 0.07 μm or less. Carbon black may be added only to the surface material layer, or only to the intermediate layer. Peculiar characteristics will appear in each of the both. Alternatively, it may also be added to the both.

By heating the prepreg sheet thus laminated, the plate material of the present invention is obtained.

The plate material useful in the present invention, in the case of a light-shielding plate, is one having a surface material layer thickness of about 15 to 40 μm, an intermediate layer thickness of about 20 to 50 μm, a total thickness of about 50 to 120 μm. In the case of an arm, one having a surface material layer thickness of 15 to 60 μm, an intermediate layer thickness of about 20 to 160 μm and a total thickness of about 120 to 220

μm is useful.

At the stage of this plate material, it may be also applied with black coating (dry loop coating). Such coating is implemented for the purpose of lowering surface reflectance, improving appearance beautifulness, improving surface lubricity. The thickness of coating may be appropriately 0.1 to 10 μm, but if it is made thinner as about 0.1 to 3 μm, the risk of warping of the plate material is lowered.

By punching or cutting the arm plate material of the present invention into a predetermined shape of a light-shielding blade or an arm, about 20 to 50 sheets of light-shielding blades can be obtained. In this case, the plate is punched or cut so that the carbon fibers of the surface material layer may be substantially in parallel to the lengthy direction of the light-shielding blade.

At the stage of the blade thus obtained, black coating may be also applied.

## BRIEF DESCRIPTION OF THE DRAWINGS

Fig. 1 is a constitutional view showing schematically the fore-, rear-blade system of a known longitudinal running focal plane shutter, and showing the state where the shutter is set.

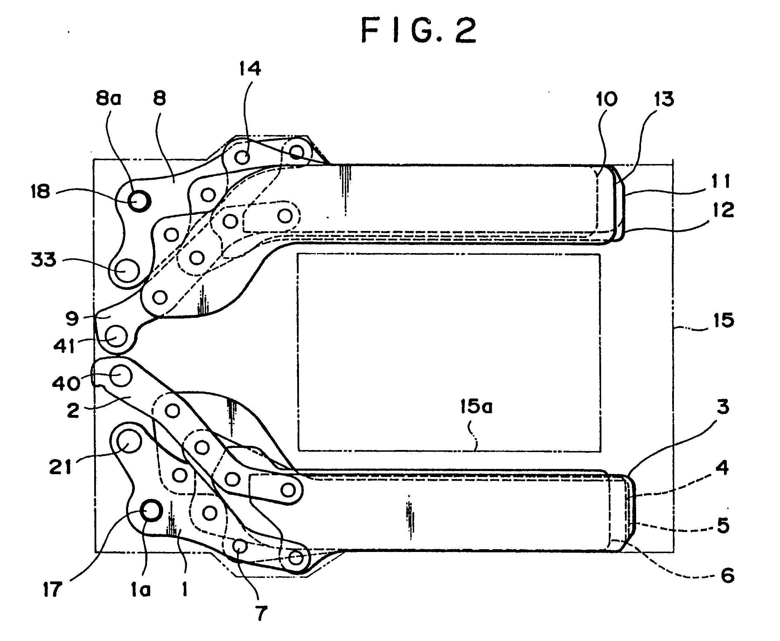

Fig. 2 is a constitutional view showing schematically the longitudinal running focal plane shutter, and showing the state where the exposure window is open.

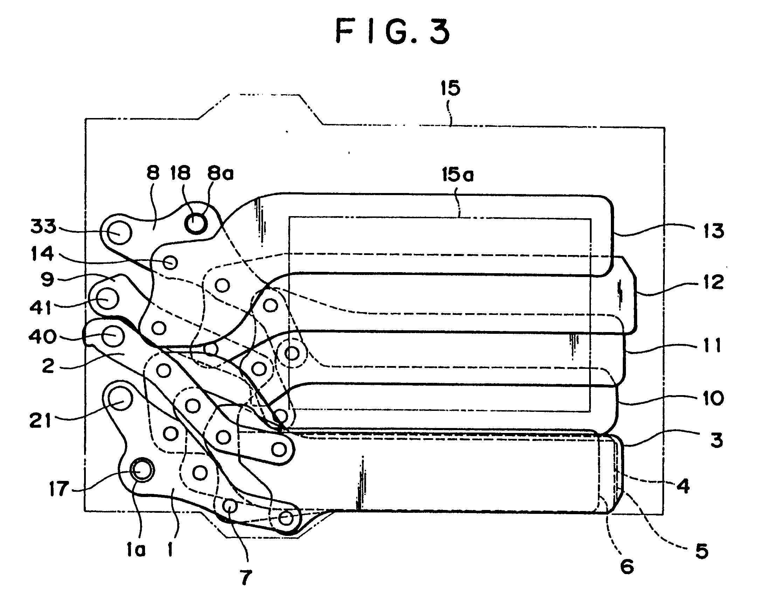

Fig. 3 is a constitutional view showing schematically the longitudinal running focal plane shutter, and showing the state where the exposure window is shut.

## DESCRIPTION OF THE PREFERRED EMBODIMENTS

Referring now to Examples, the present invention is described in more detail but the present invention is not limited to these at all.

## Example 1

(1) First, a prepreg sheet A with a thickness of 15 to 25 μm (after pressing) with the carbon fibers (average diameter 6 to 7 μm) being continuous fibers and aligned in one direction, the matrix resin an epoxy resin and the resin content 35 to 45 % by weight was prepared.

(2) Next, a prepreg sheet B with a thickness of 20 to 50 μm (after molding) with the aromatic polyamide fibers (average diameter 10 μm) being continuous fibers and aligned in one direction, the matrix resin an epoxy resin and the resin content 60 to 90 % by weight was prepared. The sheet is prepared by centrifuge draw-up method applying the papermaking technique.

(3) Two sheets A and one sheet B were prepared, and the above three sheets were laminated plane symmetrically so that the fiber directions became 0° (surface material layer)/90° (intermediate layer)/0° (surface material layer) and the kinds of the sheets became were A (surface material layer)/B (intermediate layer)/A (surface material layer), and a pressure of 5 to 15 kg/cm² applied at a temperature of 130°C, followed by leaving to stand under such state for 1 to 2 hours to cure the epoxy resin, and thereafter the composite was left to cool to obtain a plate material with a plate thickness of 50 to 100 μm.

Similarly, a large number of plate materials were prepared, and for the plate materials obtained, presence and absence of plate thickness irregularity and warping were examined.

(4) From one sheet with good flatness, 20 to 50 sheets of light-shielding blades for focal plane were prepared by press punching working. However, the plate was punched so that the direction of the carbon fibers in the surface material layer became substantially in parallel to the lengthy direction of the light-shielding blade.

At this time, for the light-shielding blades obtained, presence and absence of plate thickness irregularity and warping were examined.

(5) For a large number of light-shielding blades with good flatness, dry loop coating was applied with a film thickness of 4 μm on both front and back surfaces thereof.

## Comparative example 1

Three sheets of the prepreg sheet A prepared in Example 1 were prepared, and these sheets were laminated so that the fiber directions became 0°/90°/0° and, following the same procedure as in Example 1, the plate material, the light-shielding blade, and the "coated light-shielding blade" were successively prepared.

By coating, internal strains in some light-shielding blades became sensible to generate warping.

Of Example 1 and Comparative example, for the respective layers of surface material layer/intermediate layer/surface material layer, plate materials with the same thickness were chosen, and for the both, blades were punched out, and for the blades (1) after the weight per unit surface area was measured, longitudinal running shutters were prepared and for the shutters (2) the time of one blade ascending and descending 24 mm of angular field (called running speed) was measured. The results are shown in the following Table 1.

Table 1

|  | Example 1 | Comparative Example |
|---|---|---|
| (1) Weight ratio | 1.3 - 1.4 | 1.5 |
| (2) Running speed msec. | 2.6 - 2.7 | 2.8 |

Further, for the shutter prepared, when the durability test of ascending and descending continuously for more rapid running speeds, that of Example exhibited by far more excellent durability as compared with Comparative example. When the blade was examined after the test, cracks were observed at the peripheral portion of the caulking hole in the blade of Comparative example, with the diameter of the hole being expanded in the vertical direction (the direction substantially vertical to the lengthy direction of the blade). In contrast, there was no abnormality in the blade of Example.

Example 2

A prepreg sheet A' was prepared which was the same as the prepreg sheet A as used in Example 1 except that 10 % by weight of carbon black with an average particle size of 0.01 $\mu$m or less was added per 100 parts by weight of the resin.

Subsequently, in the same manner as in Example 1 except for using the sheet A' in place of the sheet A, a plate material, a light-shielding blade, and "a coated light-shielding blade" were successively prepared.

Example 3

A prepreg sheet $B_1$ was prepared which was the same as the prepreg sheet B used in Example 1 except for adding 10 % by weight of carbon black with an average particle size of 0.01 $\mu$m or less per 100 parts by weight of the resin.

Next, in the same manner as in Example 1 except for using the sheet $B_1$ in place of the sheet B, a plate material, a light-shielding blade, and "a coated light-shielding blade" were successively prepared.

Example 4

A prepreg sheet $B_2$ was prepared which was the same as the prepreg sheet B used in Example 1 except for the point that the polyamide fibers are in shape of a mat (fiber directions are random).

Subsequently, in the same manner as in Example 1 except for using the sheet $B_2$ in place of B, a plate material, a light-shielding blade, "a coated light-shielding blade" were successively prepared.

Example 5

A prepreg sheet $B_3$ was prepared which was the same as the prepreg sheet B used in Example 1 except that the resin content was 35 to 50 % by weight.

Subsequently, in the same manner as in Example 1 except for using the sheet $B_3$ in place of the sheet B, a plate material, a light-shielding blade and "a coated light-shielding blade" were successively prepared.

Example 6

Two sheets of prepreg sheet $B_4$ were prepared comprising polyamide fibers which were continuous fibers and aligned in one direction, having a thickness of 65 to 80 $\mu$m (after pressing). For the polyamide fibers, "Kevlar 49" or "Kevlar 149" was employed. The two sheets of the above prepreg sheet $B_4$ were superposed so that the fiber directions became the same to provide an intermediate layer. Also, one prepreg sheet with a thickness

7

of 130 to 150 μm may be made the above intermediate layer.

Subsequently, in the same manner as in Example 1 except for using the above intermediate layer comprising the two sheets of sheet $B_4$ in place of the sheet B, a plate material for arm with a plate thickness of 160 to 210 μm was obtained.

From one sheet of plate material with good flatness, 20 to 50 sheets of arms were prepared by a special vibration press drawing working, and on its front and back surfaces were applied dry loop coating with a film thickness of 4 μm per one surface.

Comparative example 2

In the same manner as in Example 6 except for using two sheets of prepreg sheet $B_5$ with a thickness of 65 to 80 μm with the continuous fibers of carbon fibers aligned in one direction in place of the prepreg sheet $B_4$ used in Example 6 to prepare arms.

Next, by use of the shutter prepared by use of the blade of Example 1 and the arm of Example 6, and the shutter prepared by use of the blade of Example 1 and the arm of Comparative example 2, durability tests were conducted at a running speed of 2.8 msec. As the result, at the fitting portion of the arm of Comparative example 2, particularly at the holes 1a and 8a, hole expansion of about 0.1 mm occurred, but the arms of Example 6 suffered from substantially no damage. As the result of making the arm lighter in weight, as compared with the case when using a titanium material as the arm, the running speed was increased by about 10 % when the driving energy was made the same in both of Example 6 and Comparative example 2.

As described above, according to the present invention, aromatic polyamide resin with smaller specific gravity, larger elongation and substantially equal tensile strength was employed in place of carbon fibers for the intermediate layer, and therefore (1) it is light, and yet substantially without lowering of rigidity, whereby there is generated substantially no waving phenomena even when the blade may be run at ultra-high speed to enable ultra-high speed shutter speed of 1/8000 sec. or higher, and besides (2) the strength at the linking portion is sufficient, without causing breaking of the linking portion even when the blade may be run at ultra-high speed.

The plate material of the present invention is light in weight and therefore can reduce the driving energy, thus affording good choice of power source of battery. Therefore, the motor drive can be made higher in speed, and electrical energy can be provided to other functions, whereby a camera with higher functions can be realized.

Particularly, the effects of the present invention can be markedly accentuated in plate materials with thin plate thickness.

## Claims

1. A plate material for light-shielding blade made of a reinforced resin having a laminated structure comprising:
   two sheets of a surface material layers made of a reinforced resin comprising continuous carbon fibers aligned in one direction substantially parallel to the lengthy direction of said light-shielding blade and a matrix resin including the fibers, and
   an intermediate layer made of a reinforced resin sandwiched between said surface material layers and comprising aromatic polyamide fibers and a matrix resin including the fibers.

2. A plate material for light-shielding according to claim 1, wherein said polyamide fibers are continuous fibers and their directions are substantially vertical to the lengthy direction of said light-shield blade.

3. A plate material for light-shielding according to claim 1, wherein said polyamide fibers are short fibers and their directions are substantially vertical to the lengthy direction of said light-shielding blade.

4. A plate material for arm made of a reinforced resin having a laminated structure comprising:
   two sheets of a surface material layers made of a reinforced resin comprising continuous carbon fibers aligned in one direction substantially parallel to the lengthy direction of said light-shielding blade and a matrix resin including the fibers, and
   an intermediate layer made of a reinforced resin sandwiched between said surface material layers and comprising aromatic polyamide fibers and a matrix resin including the fibers.

5. A plate material for arm according to claim 4, wherein said polyamide fibers are continuous fibers and their directions are substantially vertical to the lengthy direction of said light-shielding blade.

6. A plate material for arm according to claim 4, wherein said polyamide fibers are short fibers and their directions are substantially vertical to the lengthy direction of said light-shielding blade.

7. A light-shielding blade or a support therefor comprising a plate formed by laminated sheets one of which is a resin layer reinforced by aromatic polyamide fibers and another of which is a resin layer reinforced by substantially parallel carbon fibers.

# FIG. 1

EP 0 447 211 A2

# FIG. 2

EP 0 447 211 A2

FIG. 3